# EUROPÄISCHE PATENTSCHRIFT

(11) **EP 3 479 884 B1**
(45) Veröffentlichungstag und Bekanntmachung des Hinweises auf die Patenterteilung: **30.12.2020**
(21) Anmeldenummer: 17200434.3
(22) Anmeldetag: 07.11.2017
(51) Int. Cl.: A63G 7/00, A63G 31/16

(54) **FAHRGESCHÄFT, INSBESONDERE ACHTERBAHN, SOWIE VERFAHREN UND COMPUTERPROGRAMM ZUM BETREIBEN EINES DERARTIGEN FAHRGESCHÄFTS**
RIDE, IN PARTICULAR ROLLERCOASTER, METHOD AND A COMPUTER PROGRAM FOR OPERATING SUCH A RIDE
VÉHICULE D'ATTRACTION FORAINE, EN PARTICULIER GRAND HUIT AINSI QUE PROCÉDÉ ET PROGRAMME INFORMATIQUE DE FONCTIONNEMENT D'UN TEL VÉHICULE D'ATTRACTION FORAINE

(43) Veröffentlichungstag der Anmeldung: 08.05.2019
(73) Patentinhaber: VR Coaster GmbH & Co. KG, 67663 Kaiserslautern (DE)
(72) Erfinder: Gordt, Dennis, 79350 Sexau (DE)
(74) Vertreter: Westphal, Mussgnug & Partner Patentanwälte mbB

(56) Entgegenhaltungen:
- WO-A1-98/51385
- WO-A1-2017/153532
- DE-A1-102014 111 386
- US-A1- 2016 048 203

## Beschreibung

Die vorliegende Erfindung betrifft ein Fahrgeschäft, insbesondere eine Achterbahn. Weiterhin betrifft die Erfindung ein Verfahren und ein Computerprogramm zum Betreiben eines derartigen Fahrgeschäfts.

Insbesondere aufgrund der steigenden Prozessorleistung von Computern und der steigenden drahtlos übertragbaren Datenmengen kann das Konzept der virtuellen Realität (VR) auf immer mehr Anwendungsbereiche übertragen werden. Ein hervorzuhebender Anwendungsbereich stellen Fahrgeschäfte dar, die es in besonders umfangreicher Weise ermöglichen, Bewegungen, die in der virtuellen Realität stattfinden, mit realen Bewegungen zu verknüpfen, wodurch eine besonders weitgehende Immersion und ein entsprechend intensives Fahrerlebnis für den Fahrgast erreicht werden. Derartige Fahrgeschäfte sind beispielsweise aus der EP 2 138 213 B1, der JP 2001 062 154 A, der US 6 179 619 B1, DE 10 2014 111 386 A1, der US 2016/048203 A1, der WO 2017/153532 A1 und der EP 3 041 591 B1 bekannt.

Um die virtuelle Realität dem Fahrgast zugänglich zu machen, werden typischerweise Head-Mounted-Displays wie VR-Brillen verwendet. Die Head-Mounted-Displays werden üblicherweise von den Fahrgeschäften vor Beginn der Fahrt an die Fahrgäste ausgegeben und anschließend wieder eingesammelt. Die Ausgabe und das Einsammeln der Head-Mounted-Displays erfolgt dabei in einem Bahnhof des Fahrgeschäfts, in welchem die Fahrgäste in das Fahrzeug einsteigen und wieder aus dem Fahrzeug aussteigen. Folglich erfolgen die Ausgabe und das Einsammeln der Head-Mounted-Displays in unmittelbarer Nähe der Fahrzeuge. Nachdem die Fahrgäste in das Fahrzeug eingestiegen sind, müssen die Head-Mounted-Displays synchronisiert werden, so dass die virtuelle Realität mit der aktuellen Position des Fahrgasts übereinstimmen. Die Ausgabe, das Einsammeln und die Synchronisierung der Head-Mounted-Displays nehmen relativ viel Zeit in Anspruch, wodurch der Betriebsablauf verzögert wird. Für den Fall, dass eines der ausgegebenen Head-Mounted-Displays nicht funktioniert, fällt dies dem betreffenden Fahrgast meistens erst auf, wenn er bereits im Fahrzeug Platz genommen hat, da das Head-Mounted-Display aufgrund des Einstiegsvorganges zuvor noch nicht aufgesetzt werden konnte. Ein Austausch gegen ein anderes Head-Mounted-Display führt daher unweigerlich zu einer Verzögerung im Betriebsablauf. Verzögerungen im Betriebsablauf haben einen verringerten Durchsatz zur Folge, der sich nachteilig auf die Wirtschaftlichkeit des betreffenden Fahrgeschäfts auswirkt.

Außerdem ist es notwendig, dass die Darstellung in den jeweiligen Head-Mounted-Displays stets unterschiedlich erfolgt, und zwar angepasst an die Position des genutzten Fahrzeugs im Fahrgeschäft und auch an die Position des Sitzes innerhalb dieses Fahrzeugs. Dies stellt eine weitere Herausforderung an den Betrieb des Fahrgeschäftes dar, da hierfür entweder unterschiedlich eingerichtete, für jedes Fahrzeug oder jeden Sitz vorbereitete Head-Mounted-Displays verwendet und unterschieden werden müssen oder diese durch ein zusätzliches System ihre Position ermitteln müssen, was entweder zu Lasten des Durchsatzes oder dem technischen Aufwand der Installation geht und damit ebenfalls die Wirtschaftlichkeit verringert.

Eine weitere Einschränkung der Verwendung von Head-Mounted-Displays auf einem Fahrgeschäft ist, dass das Erlebnis der Fahrgäste nur auf die Bewegung des Fahrgeschäfts beschränkt ist und keine freie Bewegung innerhalb der simulierten virtuellen Realität außerhalb des Fahrzeugs möglich wird. Die umgebende reale Welt bleibt daher immer außen vor und ist nicht betretbar.

Gleichsam ist es auch bislang nicht möglich, in einer frei begehbaren virtuellen Realität einen nahtlosen Übergang zu einem dynamischen Fahrerlebnis eines Fahrgeschäfts zu integrieren. Ein solches frei begehbares VR-Erlebnis ist daher stets beschränkt auf das Umherlaufen oder das Berühren von Objekten, erlaubt aber nicht das Erlebnis von erhöhten G-Kräften oder Schwerelosigkeit, was nur mit einem größeren Fahrgeschäft, das raumgreifende Bewegungen vollzieht, ermöglicht werden kann.

Aufgabe einer Ausführungsform der vorliegenden Erfindung ist es, ein Fahrgeschäft der eingangs genannten Art anzugeben, bei dem die genannten Verzögerungen im Betriebsablauf verringert werden können, so dass das Fahrgeschäft mit einem erhöhten Durchsatz betrieben werden kann. Außerdem besteht die Aufgabe, den Bewegungsfreiraum der Fahrgäste über die vorgegebenen Bewegungen eines Fahrgeschäfts hinaus zu erweitern. Des Weiteren liegt einer Ausgestaltung der vorliegenden Erfindung die Aufgabe zugrunde, ein Verfahren zu schaffen, mit welchem das Fahrgeschäft entsprechend betrieben werden kann. Darüber hinaus liegt eine Ausbildung der Erfindung die Aufgabe zugrunde, ein Computerprogrammprodukt zum Betreiben des Fahrgeschäfts und/oder zum Durchführen dieses Verfahrens bereitzustellen.

Diese Aufgabe wird mit den in den Ansprüchen 1, 5 und 8 angegebenen Merkmalen gelöst. Vorteilhafte Ausführungsformen sind Gegenstand der Unteransprüche.

Eine Ausführungsform der Erfindung betrifft ein Fahrgeschäft, insbesondere Achterbahn, umfassend einen ersten Abschnitt, welcher eine Fahrstrecke umfasst, auf der zumindest ein Fahrzeug beweglich angeordnet ist, wobei das Fahrzeug zur Aufnahme zumindest eines Fahrgasts ausgebildet ist, einen zweiten Abschnitt, innerhalb welchem sich der Fahrgast frei bewegen kann, einen dritten Abschnitt, der den ersten Abschnitt mit dem zweiten Abschnitt verbindet und in welchem der Fahrgast in das Fahrzeug einsteigen und aus dem Fahrzeug aussteigen kann, und eine VR-Einrichtung zum Erzeugen und Darstellen einer virtuellen Realität, mit welcher eine einer Fahrt des Fahrgasts mit dem Fahrzeug entlang der Fahrstrecke im ersten Abschnitt, einer der Position und Bewegung des Fahrgasts im zweiten Abschnitt und einer dem Einsteigen und/oder dem Aussteigen des Fahrgasts im dritten Abschnitt entsprechende virtuelle Realität erzeugbar und auf einem dem Fahrgast zugeordneten Head-Mounted-Display in Abhängigkeit der Position und der Bewegung des Fahrgasts im Fahrgeschäft darstellbar ist. Die VR-Einrichtung weist dabei eine erste Positionserfassungsvorrichtung zum Erfassen der Position des Fahrzeugs auf der Fahrstrecke, eine zweite Positionserfassungsvorrichtung zum Erfassen der Position und Bewegung des Fahrgasts im zweiten und dritten Abschnitt, und eine dritte Positionserfassungsvorrichtung zum Erfassen der Halteposition des Fahrzeugs im dritten Abschnitt auf.

Das vorschlagsgemäße Fahrgeschäft weist einen ersten Abschnitt, in welchem sich die Fahrbahn befindet, einen zweiten Abschnitt, in welchem sich der Fahrgast frei bewegen kann, und einen dritten Abschnitt auf, der den ersten Abschnitt mit dem zweiten Abschnitt verbindet und in welchem der Fahrgast in das Fahrzeug einsteigen und aus dem Fahrzeug aussteigen kann. Unter dem Begriff "frei bewegen" soll verstanden werden, dass der Fahrgast sich innerhalb der vom zweiten Abschnitt vorgegebenen Grenzen und Hindernissen frei bewegen kann. Der zweite Abschnitt kann von Wänden begrenzt sein und Hindernisse wie Geländer und Treppen aufweisen, welche der Bewegungsfreiheit des Fahrgasts bestimmte Beschränkungen auferlegen. Allerdings gehen diese Beschränkungen nicht über diejenigen hinaus, die in der realen Welt vorhanden sind. Solange er sich aber im Fahrzeug und folglich im ersten Abschnitt befindet, ist er selbst nicht mehr frei über seine Bewegungen zu entscheiden, da er mit einer Rückhalteeinrichtung im Fahrzeug gesichert wird und das Fahrzeug nicht verlassen kann, solange sich die Rückhalteeinrichtung in der Schließstellung befindet.

Wie bereits erwähnt, wird der erste Abschnitt von der Fahrstrecke vorgegeben, während sich der zweite Abschnitt außerhalb des ersten Abschnitts befindet. Der dritte Abschnitt verbindet dabei den ersten Abschnitt und dem zweiten Abschnitt und kann auch als Überlappungsbereich des ersten Abschnitts und des zweiten Abschnitts angesehen werden. Im dritten Bereich wird der Umstieg vom zweiten Bereich in den ersten Bereich und umgekehrt ermöglicht. Beispielsweise bei Achterbahnen ist dies im Bahnhof der Fall. Da sich die Fahrgäste aber auch im Bahnhof in gewissen Grenzen frei bewegen können, ist die Abgrenzung zwischen den drei Abschnitten nicht immer eindeutig zu definieren, so dass es auch Überschneidungen geben kann. Es gibt aber auch Fahrgeschäfte, bei denen es in dem Sinne keinen Bahnhof gibt, beispielsweise dann, wenn das Fahrgeschäft keine Fahrstrecke in Form eines Gleissystems aufweist, sondern eine sich drehende Plattform oder Aufhängung, an denen die Fahrzeuge befestigt sind. In diesem Fall ist der dritte Abschnitt die unmittelbare Umgebung des stehenden Fahrzeugs.

Die virtuelle Realität wird dem Fahrgast in allen drei Abschnitten eingeblendet. Folglich erstreckt sich die virtuelle Realität nicht nur auf die Fahrstrecke, wie es in den Fahrgeschäften, die in der EP 2 138 213 B1, der JP 2001 062 154 A, der US 6 179 619 B1 und der EP 3 041 591 B1 offenbart sind, der Fall ist. Vielmehr wird insbesondere der zweite Abschnitt mit in die virtuelle Realität eingebunden. Die zweite Positionserfassungseinrichtung ist so ausgestaltet, dass sie die Position und Bewegung des Fahrgasts im zweiten und dritten Abschnitt erfassen und an die VR-Einrichtung übermitteln kann.

Die Ausgabe und das Einsammeln der Head-Mounted-Displays können daher räumlich deutlich beabstandet vom dritten Abschnitt, in welchem die Fahrgäste in die Fahrzeuge ein- und aus diesen aussteigen, erfolgen. Da je nach Größe des zweiten Abschnitts der Fahrgast eine mehr oder weniger große Distanz bis zum dritten Abschnitt zurücklegen muss, können die Ausgabe und das Einsammeln der Head-Mounted-Displays auch zeitlich getrennt vom Ein- und Aussteigen durchgeführt werden. Die Synchronisierung der Head-Mounted-Displays kann in einem Eingangsbereich des zweiten Abschnitts erfolgen. Weiterhin können fehlerhafte Head-Mounted-Displays bereits im Eingangsbereich ausgetauscht werden. Aufgrund der Einbeziehung des zweiten Abschnitts in die virtuelle Realität wird ein Puffer bezogen auf die Fahrgäste geschaffen, wodurch Verzögerungen insbesondere bei der Ausgabe der Head-Mounted-Displays nicht zu Verzögerungen im Betriebsablauf des Fahrzeugs führen.

Da die virtuelle Realität nicht nur auf die Fahrt mit dem Fahrzeug begrenzt ist, sondern auf den zweiten Abschnitt erstreckt wird, verlängert sich die Zeit, in welcher sich der Fahrgast in der virtuellen Realität befindet. Die Wartezeiten werden hierdurch reduziert.

Der Fahrgast soll das Head-Mounted-Display beim Ein- und Aussteigen in das bzw. aus dem Fahrzeug nicht ablegen, so dass der Fahrgast das Ein- und Aussteigen anhand der von der virtuellen Realität gelieferten Informationen durchführen können muss. Dies setzt voraus, dass ein mit der virtuellen Realität übereinstimmender Übergang in das Fahrzeug sichergestellt ist. Hindernisse wie Stufen, Geländer, Wandungen oder Sicherungsbügel müssen in der virtuellen Realität zumindest von der Anordnung und den Abmessungen genauso dargestellt werden, wie sie in der realen Welt vorliegen, da sonst der Fahrgast stolpern oder sich an diesen Gegenständen verletzen könnte. Hierzu ist es notwendig, dass die Halteposition des Fahrzeugs im dritten Abschnitt, in welchem der Fahrgast ein- und aussteigt, sehr exakt erfasst und bestimmt werden kann. Daher weist das vorschlagsgemäße Fahrgeschäft die dritte Positionserfassungsvorrichtung zum Erfassen der Halteposition des Fahrzeugs im dritten Abschnitt auf, die hierzu speziell ausgebildet ist. Wie auch beim Fahrgeschäft gemäß der EP 3 041 591 B1 weist das vorschlagsgemäße Fahrgeschäft die erste Positionserfassungsvorrichtung zum Erfassen der Position des Fahrzeugs auf der Fahrstrecke auf. Diese dient dazu, die virtuelle Realität mit dem Fahrzeug zu synchronisieren, um eine Latenz zu verhindern, welche beim Fahrgast Übelkeit und Schwindelgefühle auslösen kann. Hierzu ist es aber nicht notwendig, die Position des Fahrzeugs auf der Fahrstrecke sehr genau zu bestimmen. Eine Abweichung von ± 20 cm kann akzeptiert werden. Eine derartige Abweichung ist aber im dritten Abschnitt nicht akzeptierbar, da dies zu dem oben beschriebenen Stolpern und/oder Anschlagen an das Fahrzeug oder an Hindernisse im dritten Abschnitt führen kann. Vorschlagsgemäß weist die dritte Positionserfassungsvorrichtung eine höhere Präzision hinsichtlich der Positionsbestimmung des Fahrzeugs auf als die erste Positionserfassungsvorrichtung. Die dritte Positionserfassungsvorrichtung ist nur im dritten Abschnitt, wo die Position und insbesondere der Halteposition des Fahrzeugs mit einer erhöhten Genauigkeit festgestellt werden muss, angeordnet. Da die erhöhte Messgenauigkeit üblicherweise mit einem erhöhten Datenvolumen und mit teureren Positionssensoren einhergeht, werden diese nur dort verwendet, wo sie unabdingbar sind. Das Datenvolumen und die Kosten werden hierdurch in Grenzen gehalten.

Nach Maßgabe einer weiteren Ausführungsform ist die dritte Positionserfassungsvorrichtung derart eingerichtet, dass die Halteposition des Fahrzeugs auf 20 mm bis 0,1 mm und insbesondere 10 mm bis 0,2 mm genau erfassbar ist. Es hat sich herausgestellt, dass eine derartige Genauigkeit einen reibungslosen Ein- und Ausstieg ermöglicht. Da mit steigender Genauigkeit, mit welcher die dritte Positionserfassungsvorrichtung betrieben werden kann, die Datenmengen steigen und höherwertigere Positionssensoren verwendet werden müssen, ermöglicht es diese Ausführungsform, hier einen Kompromiss zu finden, der eine ausreichende Genauigkeit bei akzeptierbarem Datenvolumen und preislich akzeptablen Positionssensoren bereitstellt.

In einer weitergebildeten Ausführungsform kann die dritte Positionserfassungsvorrichtung induktiv und/oder optisch arbeitende Positionssensoren umfassen. Mit derartigen Positionssensoren lässt sich die geforderte Genauigkeit zuverlässig erreichen, ohne dass die Positionssensoren zu teuer werden.

Bei einer weitergebildeten Ausführungsform können die Positionssensoren auf dem Fahrzeug angeordnet sein und das Fahrzeug eine Übermittlungseinrichtung zum Übermitteln der Position des Fahrzeugs an die VR-Einrichtung aufweisen. Die Übermittlungseinrichtung kann die Position des Fahrzeugs drahtlos oder über die Fahrstrecke übermitteln. Insbesondere beim Nachrüsten von bestehenden Fahrgeschäften ergeben sich Vorteile, da der Betreiber des Fahrgeschäfts im dritten Abschnitt bzw. im Bahnhof selbst keine Umbaumaßnahmen vornehmen müssen. Die dritten Positionssensoren können vom Hersteller der Fahrzeuge im Rahmen einer Inspektion verbaut werden, so dass die Stillstandzeiten beim Nachrüsten gering gehalten werden. Für den Betreiber des Fahrgeschäfts wird die Nachrüstung weniger aufwendig.

Es können beispielsweise folgende Messmethoden verwendet werden. Es kann ein sogenanntes "outside-in-tracking" eingesetzt werden, bei dem der Positionssensor getrennt und außerhalb von den Head-Mounted-Displays angeordnet ist. Hierzu können Markierungen an den sich bewegenden Objekten befestigt werden, in diesem Fall an den Head-Mounted-Displays der Fahrgäste. Der Positionssensor kann die Bewegung der Markierungen verfolgen, wodurch die Position des Fahrgasts im Fahrgeschäft errechnet und an die betreffenden Head-Mounted-Displays übertragen werden kann. Auf solche Markierungen kann aber auch verzichtet werden. In diesem Fall müssen die Positionserfassungsvorrichtungen aus den Daten der Positionssensoren Objekte, in diesem Fall den Fahrgast, zu identifizieren, beispielsweise mittels einer Bestimmung des Umrisses, dem fortlaufend gefolgt wird. Diese Messmethoden eignen sich insbesondere für den zweiten und dritten Abschnitt, so dass die zweite und die dritte Positionserfassungsvorrichtung gleich aufgebaut und zu einer Positionserfassungsvorrichtung zusammengefasst sein können.

Darüber hinaus können sogenannte "inside-out-trackings" verwendet werden, bei denen der Positionssensor auf dem Head-Mounted-Display angeordnet ist. Auch hierbei können Markierungen verwendet werden, um fest im ersten, zweiten oder dritten Abschnitt angeordnete Orientierungshilfen zu schaffen. Ein "inside-out-tracking" ohne die Verwendung von Markern ist aber auch möglich. In diesem Fall kann eine Messmethode innerhalb des gesamten Fahrgeschäfts verwendet werden, so dass die erste, die zweite und die dritte Positionserfassungsvorrichtung zu einer Positionserfassungsvorrichtung zusammengefasst sind.

Eine Ausgestaltung der Erfindung betrifft ein Verfahren zum Betreiben eines Fahrgeschäfts, insbesondere einer Achterbahn, nach einem der vorherigen Ausführungsformen, umfassend folgende Schritte:
- Erfassen der Position des Fahrzeugs auf der Fahrstrecke mittels der ersten Positionserfassungsvorrichtung,
- Erfassen der Position und Bewegung des Fahrgasts im zweiten und dritten Abschnitt mittels der zweiten Positionserfassungsvorrichtung,
- Erfassen der Halteposition des Fahrzeugs im dritten Abschnitt mittels der dritten Positionserfassungsvorrichtung,
- Übermitteln der erfassten Positionen, Bewegung und Halteposition an die VR-Einrichtung, und
- Erzeugen und Darstellen einer virtuellen Realität, mit welcher eine einer Fahrt des Fahrgasts mit dem Fahrzeug entlang der Fahrstrecke im ersten Abschnitt, einer der Position und Bewegung des Fahrgasts im zweiten Abschnitt und einer dem Einsteigen und/oder dem Aussteigen des Fahrgasts im dritten Abschnitt entsprechende virtuelle Realität erzeugt und auf einem dem Fahrgast zugeordneten Head-Mounted-Display in Abhängigkeit der Position und Bewegung des Fahrgasts im Fahrgeschäft dargestellt wird.

Die technischen Effekte und Vorteile, die sich mit dem vorschlagsgemäßen Verfahren erreichen lassen, entsprechen denjenigen, die für das vorliegende Fahrgeschäft erörtert worden sind. Zusammenfassend sei darauf hingewiesen, dass die virtuelle Realität auf den zweiten Abschnitt erstreckt wird, so dass das An- und Ablegen des Head-Mounted-Displays zeitlich und räumlich beabstandet vom Ein- und Aussteigen in das und aus dem Fahrzeug erfolgen kann. Folglich werden Verzögerungen im Betriebsablauf aufgrund einer Pufferung vermieden oder deutlich verringert. Der Durchsatz des Fahrgeschäfts kann gesteigert werden. Zudem kann die Zeit, für welche sich der Fahrgast in der virtuellen Realität befindet, verlängert werden. Die Verwendung einer dritten Positionserfassungsvorrichtung ermöglicht die Anpassung auf das Ein- und Aussteigen der Fahrgäste in das und aus dem Fahrzeug, so dass die hierauf angepassten Positionssensoren nur hier verwendet werden, wodurch die Kosten und die übertragenen Datenmengen gering gehalten werden.

In einer weiteren Ausgestaltung kann das Verfahren folgenden Schritt umfassen:
- Erfassen der Halteposition des Fahrzeugs auf 20 mm bis 0,1 mm genau mittels der dritten Positionserfassungsvorrichtung.

Es hat sich herausgestellt, dass eine derartige Genauigkeit einen reibungslosen Ein- und Ausstieg ermöglicht.

Nach Maßgabe einer weiteren Ausgestaltung umfasst das Verfahren folgenden Schritt:
- Definieren einer Halteposition des Fahrzeugs im dritten Abschnitt und
- Bewegen des Fahrzeugs innerhalb des dritten Abschnitts derart, dass das Fahrzeug auf 20 mm bis 0,1 mm genau die Halteposition einnimmt.

Wie bereits erwähnt, ist die Kenntnis der exakten Halteposition des Fahrzeugs von großer Bedeutung für das reibungslose Ein- und Aussteigen. Wenn das Fahrzeug mit einer mehr oder weniger großen Abweichung von einer vorbestimmten Halteposition zum Halten kommt, muss die virtuelle Realität diese Abweichung bei der Darstellung des Fahrzeugs und der umgebenden Elemente wie Sicherungsbügel und Wandungen berücksichtigen, wozu ein bestimmter Programmier- und Rechenaufwand erforderlich ist. Wenn jedoch das Fahrzeug mit einer Abweichung von maximal ± 10 mm zum Halten kommt, kann die virtuelle Realität so ausgebildet sein, dass das haltende Fahrzeug immer gleich dargestellt wird, weshalb der diesbezügliche Programmier- und Rechenaufwand gering gehalten werden kann.

Eine fortgebildete Ausgestaltung des Verfahrens umfasst folgende Schritte:
- Darstellen der virtuellen Realität im ersten Abschnitt, im zweiten Abschnitt und/oder im dritten Abschnitt mittels einer in Echtzeit generierten Umgebungsdarstellung (Echtzeitgrafik), mittels einer als Videosequenz vorberechneten Darstellung der virtuellen Realität oder mittels einer in Echtzeit generierten, aber verbunden mit vorberechneten Elementen dargestellten virtuellen Realität.

Bei einer reinen Echtzeitgrafik wird die virtuelle Realität vollständig in Abhängigkeit von der momentanen Position des Fahrgasts berechnet, so dass ein relativ großer Rechenaufwand notwendig ist. Folglich sind der Qualität der Grafik, mit weleher die virtuelle Realität angezeigt wird, bestimmte Grenzen gesetzt. Im ersten Abschnitt wird die Position des Fahrgasts im Wesentlichen vom Fahrzeug vorgegeben, allein die Ausrichtung des Head-Mounted-Displays kann nicht vorherbestimmt werden. Folglich kann bei der Berechnung der virtuellen Realität im ersten Abschnitt auf vorberechnete Datensätze, etwa einer sphärischen 360°-Videosequenz, zurückgegriffen werden, so dass die virtuelle Realität im ersten Abschnitt ohne einen nennenswerten Verlust der Qualität der Grafik berechnet werden kann. Bei der Verwendung einer solchen vorberechneten Grafiksequenz ist die virtuelle Realität weitgehend fertig vorgegeben und es werden im Wesentlichen nur noch die Bewegungen des Kopfes des Fahrgasts berücksichtigt. Die Immersion ist bei unter Verwendung von vorberechneten Grafiken erzeugten virtuellen Realitäten im Allgemeinen nicht so groß wie bei virtuellen Realitäten, die in Echtzeit erzeugt werden.

Bei einer hybriden Darstellung werden Teile der virtuellen Realität in Echtzeit und andere Teile mit einer vorberechneten Grafik dargestellt. Die vorberechneten Teile der virtuellen Realität werden vorwiegend für Objekte verwendet, die im Hintergrund der virtuellen Realität angeordnet sind und welche daher vom Betrachter mit einer geringeren Parallaxe wahrgenommen werden. Hierdurch lässt sich der Rechenaufwand ohne nennenswerte Einbuße bei der Immersion verringern. Elemente, die sich im Vordergrund befinden, also sehr nahe bei dem Beobachtungspunkt des Fahrgastes, können allerdings in Echtzeitgrafik dargestellt werden, wodurch diese räumlich überzeugender mit stets korrekter Parallaxe bei Kopfbewegungen erscheinen. Außerdem lassen sich mittels Echtzeitgrafikelementen im Vordergrund interaktive Elemente integrieren.

Die Verwendung von vorberechneten Grafiken oder einer hybriden Darstellung für die virtuelle Realität bietet sich insbesondere für den ersten Abschnitt an, da sich der Fahrgast in diesen Abschnitt an einer bekannten Position und auch in einer bekannten Fahrbewegung befindet.

Das Umschalten zwischen einer Darstellung der virtuellen Realität mittels einer Echtzeitgrafik und einer vorberechneten Grafik lässt sich anhand der Position des Benutzers innerhalb des Fahrgeschäfts durchführen.

Eine Ausführung der Erfindung betrifft ein Computerprogramm zum Ausführen eines Verfahrens nach einem der zuvor diskutierten Ausgestaltungen und/oder zum Betreiben eines Fahrgeschäfts, insbesondere einer Achterbahn, nach einer der zuvor erläuterten Ausführungsformen, insbesondere einer Achterbahn, wobei das Computerprogramm Programmmittel zum Veranlassen der VR-Einrichtung umfasst, die folgenden Schritte auszuführen, wenn das Computerprogramm auf der VR-Einrichtung ausgeführt wird:
- Erfassen der Position des Fahrzeugs auf der Fahrstrecke mittels der ersten Positionserfassungsvorrichtung,
- Erfassen der Position und Bewegung des Fahrgasts im zweiten und dritten Abschnitt mittels der zweiten Positionserfassungsvorrichtung,
- Erfassen der Halteposition des Fahrzeugs im dritten Abschnitt mittels der dritten Positionserfassungsvorrichtung,
- Übermitteln der erfassten Positionen, Bewegung und Halteposition an die VR-Einrichtung, und
- Erzeugen und Darstellen einer virtuellen Realität, mit welcher eine einer Fahrt des Fahrgasts mit dem Fahrzeug entlang der Fahrstrecke im ersten Abschnitt, einer der Position und Bewegung des Fahrgasts im zweiten Abschnitt und einer dem Einsteigen und/oder dem Aussteigen des Fahrgasts im dritten Abschnitt entsprechende virtuelle Realität erzeugt und auf einem dem Fahrgast zugeordneten Head-Mounted-Display in Abhängigkeit der Position und Bewegung des Fahrgasts im Fahrgeschäft dargestellt wird.

Die technischen Effekte und Vorteile, die sich mit dem vorschlagsgemäßen Computerprogramm erreichen lassen, entsprechen denjenigen, die für das vorliegende Fahrgeschäft erörtert worden sind. Zusammenfassend sei darauf hingewiesen, dass die virtuelle Realität auf den zweiten Abschnitt erstreckt wird, so dass das An- und Ablegen des Head-Mounted-Displays zeitlich und räumlich beabstandet vom Ein- und Aussteigen in das und aus dem Fahrzeug erfolgen kann. Folglich werden Verzögerungen im Betriebsablauf aufgrund einer Pufferung vermieden oder deutlich verringert. Der Durchsatz des Fahrgeschäfts kann gesteigert werden. Zudem kann die Zeit, für welche sich der Fahrgast in der virtuellen Realität befindet, verlängert werden. Die Verwendung einer dritten Positionserfassungsvorrichtung ermöglicht die Anpassung auf das Ein- und Aussteigen der Fahrgäste in das und aus dem Fahrzeug, so dass die hierauf angepassten Positionssensoren nur hier verwendet werden, wodurch die Kosten und die übertragenen Datenmengen gering gehalten werden.

Gemäß einer weiteren Ausführung der Erfindung führt das Computerprogramm folgende Schritte aus:
- Automatisches Wechseln der Positionserfassung zwischen der ersten Positionserfassungsvorrichtung, der zweiten Positionserfassungsvorrichtung und der dritten Positionserfassungsvorrichtung in Abhängigkeit von der Position des Fahrgasts und/oder von der Geschwindigkeit des Fahrzeugs, oder
- Wechseln der Positionserfassung zwischen der ersten Positionserfassungsvorrichtung, der zweiten Positionserfassungsvorrichtung und der dritten Positionserfassungsvorrichtung nach Bestätigung eines Mitarbeiters des Fahrgeschäfts.

Wie bereits erwähnt, bietet es sich insbesondere im zweiten und im dritten Abschnitt an, Marker zur Positionserfassung des Fahrgasts zu verwenden. Zwar könnte die Position des Fahrgasts auch im ersten Abschnitt unter Verwendung von Markern erfasst werden, allerdings müssten in diesem Fall die erste Positionserfassungsvorrichtung entsprechend eingerichtet werden. Da aber, wie beschrieben, die des Fahrgasts im ersten Abschnitt hinreichend genau mit der Bestimmung der Position des Fahrzeugs auf der Fahrstrecke bestimmt werden kann, wozu Streckensensoren eingesetzt werden, ist es nicht notwendig, die erste Positionserfassungsvorrichtung mi entsprechenden Positionssensoren auszustatten. Allerdings ist es dann notwendig, die entsprechenden Sensoren zur Positionsbestimmung zu aktivieren. Dies kann beispielsweise anhand der ermittelten Position selbst und/oder mit den erfassten Bewegungsmustern geschehen. Wenn sich der Fahrgast im dritten Abschnitt befindet, weiß das Computerprogramm, dass ein Wechsel zwischen den Positionserfassungsvorrichtungen getätigt werden muss. Hierbei kann das Computerprogramm das Bewegungsmuster des betreffenden Fahrgasts berücksichtigen. Hat sich der Fahrgast in der Zeit vor dem Erreichen des dritten Abschnitts im zweiten Abschnitt aufgehalten, muss von der zweiten Positionserfassungsvorrichtung zur ersten Positionserfassungsvorrichtung gewechselt werden. Hat sich der Fahrgast zuvor im ersten Abschnitt aufgehalten, muss von der ersten Positionserfassungsvorrichtung zur zweiten Positionserfassungsvorrichtung gewechselt werden.

Alternativ kann der Wechsel auch von einem Mitarbeiter des Fahrgeschäfts ausgeführt werden. Das Computerprogramm kann dann, wenn es davon ausgeht, dass beispielsweise von der zweiten zur ersten Positionserfassungsvorrichtung gewechselt werden soll, dem Mitarbeiter ein entsprechendes Signal geben. So kann ein Knopf aufleuchten, den der Mitarbeiter bestätigen kann. Diese Bestätigung kann auch als ein Freigabesignal verwendet werden, um das Fahrzeug in Bewegung zu versetzen. Der Mitarbeiter drückt den Knopf dann, wenn alle Fahrgäste ordnungsgemäß im Fahrzeug sitzen und mit den Sicherungsbügeln gesichert sind. In diesem Fall wird mit der Bestätigung des Wechsels von der zweiten zur ersten Positionserfassungsvorrichtung auch eine Sicherheitsabfrage realisiert.

Eine beispielhafte Ausführungsform der Erfindung wird im Folgenden unter Bezugnahme auf die beigefügten Zeichnungen näher erläutert. Es zeigt

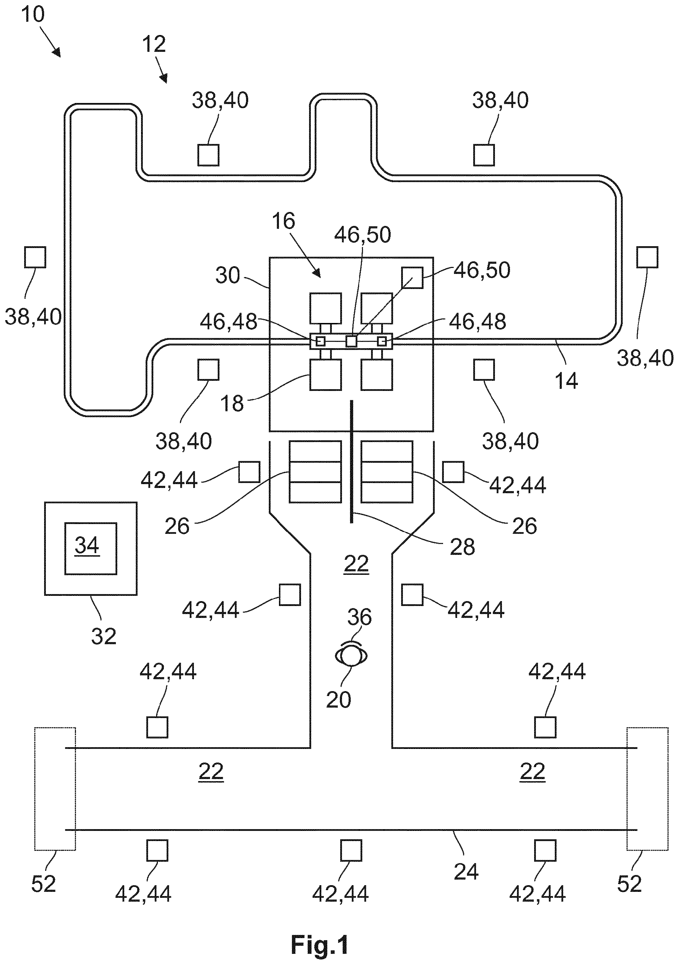

### Figur 1 eine schematische Darstellung einer Ausführungsform eines erfindungsgemäßen Fahrgeschäfts.

In Figur 1 ist ein Ausführungsbeispiel eines erfindungsgemäßen Fahrgeschäfts 10 anhand einer prinzipiellen Darstellung gezeigt. Das Fahrgeschäft 10 umfasst einen ersten Abschnitt 12, der eine Fahrstrecke 14 aufweist, entlang welcher ein Fahrzeug 16 mittels nicht dargestellter Antriebsmittel bewegt werden kann. Selbstverständlich kann das Fahrgeschäft 10 mehr als ein Fahrzeug 16 aufweisen. Im dargestellten Ausführungsbeispiel handelt es sich beim Fahrgeschäft 10 um eine Achterbahn.

Das Fahrzeug 16 weist im dargestellten Ausführungsbeispiel vier Fahrgastaufnahmen 18 auf, mit denen jeweils ein Fahrgast 20 im Fahrzeug 16 aufgenommen werden kann. Die Fahrgastaufnahmen 18 weisen nicht dargestellte Rückhalteeinrichtungen auf, welche zwischen einer Offenstellung und einer Schließstellung bewegbar sind. In der Schließstellung sichern die Rückhalteeinrichtungen die Fahrgäste 20, so dass sie während der Fahrt nicht aus dem Fahrzeug 16 herausfallen kann. Folglich kann sich der Fahrgast 20 in der Schließstellung nur sehr eingeschränkt bewegen und die Fahrgastaufnahme 18 nicht verlassen.

Weiterhin weist das Fahrgeschäft 10 einen zweiten Abschnitt 22 auf, der sich außerhalb der Fahrstrecke 14 befindet und im dargestellten Ausführungsbeispiel von Wänden 24 begrenzt wird. Im zweiten Abschnitt 22 kann sich der Fahrgast 20 weitgehend frei bewegen, wobei der zweite Abschnitt 22 Hindernisse wie Treppen 26 und Geländer 28 aufweist, welche die Bewegungsfreiheit des Fahrgasts 20 begrenzen, allerdings im Vergleich zu den Rückhalteeinrichtungen des Fahrzeugs 16 in einem deutlich weniger starken Umfang.

Darüber hinaus umfasst das Fahrgeschäft 10 einen dritten Abschnitt 30, welcher den ersten Abschnitt 12 mit dem zweiten Abschnitt 22 verbindet. Im dritten Abschnitt 30 können die Fahrgäste 20 in das Fahrzeug 16 einsteigen und aus dem Fahrzeug 16 aussteigen. Die Fahrstrecke 14 durchläuft den dritten Abschnitt 30. Der dritte Abschnitt 30 kann auch als Bahnhof bezeichnet werden.

Das Fahrgeschäft 10 weist ferner eine VR-Einrichtung 32 auf, mit welcher eine virtuelle Realität erzeugt und dargestellt werden kann. Hierzu weist die VR-Einrichtung 32 eine Recheneinheit 34 auf. Die VR-Einrichtung 32 kommuniziert drahtlos mit zumindest einem Head-Mounted-Display 36, welches der Fahrgast 20 vergleichbar mit einer Brille trägt. Das Head-Mounted-Display 36 stellt dem Fahrgast 20 die virtuelle Realität dar.

Damit eine möglichst große Immersion, also ein möglichst als real empfundener Eindruck der virtuellen Realität, erreicht werden kann, müssen die Position und die Bewegung des Fahrgasts 20 denjenigen in der virtuellen Realität entsprechen. Daher umfasst die VR-Einrichtung 32 eine erste Positionserfassungsvorrichtung 38 zum Erfassen der Position des Fahrzeugs 16 auf der Fahrstrecke 14. Wie bereits oben erwähnt, kann sich der Fahrgast 20 im Fahrzeug 16 nur sehr begrenzt bewegen, so dass eine relativ große Immersion bereits dadurch erreicht werden kann, dass die Position des Fahrzeugs 16 auf der Fahrstrecke 14 bestimmt wird. Die Fahrstrecke 14 ist bekannt, so dass die virtuelle Realität nur an die Position des Fahrzeugs 16 angepasst werden muss. Die Bewegung des Fahrgasts 20 kann dabei vernachlässigt werden. Dies schließt nicht aus, die Bewegung des Fahrgasts 20 im Fahrzeug 16 dennoch beim Erzeugen der virtuellen Realität zu berücksichtigen, insbesondere die Bewegung des Kopfes des Fahrzeugs 16, wodurch die Immersion erhöht werden kann. Die Position des Fahrzeugs 16 auf der Fahrstrecke 14 wird mittels Streckensensoren 40 erfasst und zur Recheneinheit 34 übermittelt, welche die Position des Fahrzeugs 16 auf der Fahrstrecke 14 bei der Erzeugung der virtuellen Realität berücksichtigt.

Weiterhin weist die VR-Einrichtung 32 eine zweite Positionserfassungsvorrichtung 42 zum Erfassen der Position und Bewegung des Fahrgasts 20 im zweiten und dritten Abschnitt 30 auf. Die zweite Positionserfassungsvorrichtung 42 umfasst eine Mehrzahl von im zweiten Abschnitt 22 angeordneter Bewegungssensoren 44. Wie bereits erwähnt, kann sich der Fahrgast 20 im zweiten Abschnitt 22 weitgehend frei bewegen. Dies gilt auch für den dritten Abschnitt 30, solange sich der Fahrgast 20 noch nicht in der Fahrgastaufnahme 18 befindet und die Rückhalteeinrichtung noch nicht in die Schließstellung gestellt worden ist. Im Vergleich zum ersten Abschnitt 12 hat der Fahrgast 20 folglich im zweiten Abschnitt 22 und unter den genannten Bedingungen auch im dritten Abschnitt 30 eine deutlich höhere Bewegungsfreiheit. Zudem ist der Weg, den der Fahrgast 20 insbesondere im zweiten Abschnitt 22 zurücklegt, nur bedingt vorbestimmbar. Insofern sind die von der zweiten Positionserfassungsvorrichtung 42 erzeugten Datenmengen größer als diejenigen, die von der ersten Positionserfassungsvorrichtung 38 erzeugt werden. Die Position und die Bewegung des Fahrgasts 20 im zweiten und dritten Abschnitt 22, 30 werden zur Recheneinheit 34 übermittelt, welche die Position und die Bewegung des Fahrgasts 20 im zweiten und dritten Abschnitt 22, 30 bei der Erzeugung der virtuellen Realität berücksichtigt.

Darüber hinaus umfasst die VR-Einrichtung 32 dritte Positionserfassungsvorrichtung 46 zum Erfassen der Halteposition des Fahrzeugs 16 im dritten Abschnitt 30. Wie im Folgenden erläutert wird, umfasst die dritte Positionserfassungsvorrichtung 46 hierzu Positionssensoren 48, die sich deutlich von den Streckensensoren 40, welche die Position des Fahrzeugs 16 auf der Fahrstrecke 14 erfassen. Im dargestellten Ausführungsbeispiel sind die Positionssensoren 48 auf dem Fahrzeug 16 angeordnet, deren Signale mittels einer Übermittlungseinrichtung 50 an die Recheneinheit 34 übermittelt werden. Auch die Halteposition des Fahrzeugs 16 wird bei der der Erzeugung der virtuellen Realität berücksichtigt. Folglich erstreckt sich die virtuelle Realität über alle drei Abschnitte 12, 22, 30 des Fahrgeschäfts 10.

Das Fahrgeschäft 10 wird auf folgende Weise betrieben: Im dargestellten Ausführungsbeispiel weist der zweite Abschnitt 22 zwei Eingangsbereiche 52 auf. In einem dieser Eingangsbereiche 52 wird dem Fahrgast 20 von einem nicht dargestellten Mitarbeiter des Fahrgeschäfts 10 ein Head-Mounted-Display 36 an den Fahrgast 20 übergeben, der das Head-Mounted-Display 36 aufsetzt. Anschließend wird das Head-Mounted-Display 36 mit der Recheneinheit 34 synchronisiert und auf Funktionsfähigkeit hin überprüft. Die Synchronisierung bewirkt, dass nun die Recheneinheit 34 eine virtuelle Realität für dieses Head-Mounted-Display 36 erzeugt und diese an das Head-Mounted-Display 36 übermittelt, so dass diese virtuelle Realität dem Fahrgast 20 dargestellt werden kann. Für den Fall, dass das betreffende Head-Mounted-Display 36 nicht einwandfrei funktionieren sollte, wird es vom Mitarbeiter des Fahrgeschäfts 10 gegen ein anderes ausgetauscht.

Im Folgenden soll angenommen werden, dass die virtuelle Realität einen Flughafen nachbildet. Die virtuelle Realität bildet Eigenschaften des zweiten Abschnitts 22 mehr oder weniger verfremdet nach. Die Wände 24 des zweiten Abschnitts 22 können als Zäune zur Begrenzung eines Flugfelds oder als Wände 24 eines Hangars nachgebildet werden. Der Fahrgast 20 wird von den nachgebildeten Zäunen oder Wänden 24 durch den zweiten Abschnitt 22 und zum dritten Abschnitt 30 geleitet. Hierzu kann die virtuelle Realität dem Fahrgast 20 entsprechende Wegweiser anzeigen. Wie bereits erwähnt, weist der zweite Abschnitt 22 Treppen 26 auf, die erklommen werden müssen, um zum dritten Abschnitt 30 zu gelangen. Die Treppen 26 und das Geländer 28 können von der virtuellen Welt ebenfalls als Treppen 26 und Geländer 28 nachgebildet werden, welche an ein Flugzeug angelehnt sind und über welche in das Cockpit des Flugzeugs eingestiegen werden kann. Das Cockpit befindet sich in der realen Welt in der Fahrgastaufnahme 18 des Fahrzeugs 16.

Um die Immersion nicht zu unterbrechen, behält der Fahrgast 20 das Head-Mounted-Display 36 auch beim Einsteigen auf. Die virtuelle Realität muss so genau abgebildet werden, dass der Fahrgast 20 ohne Stolpern und Anstoßen an Gegenstände des Fahrzeugs 16, beispielsweise an die Rückhalteeinrichtung, in die Fahrgastaufnahme 18 einsteigen kann. Hierzu ist es notwendig, dass die virtuelle Realität mit der realen Welt exakt übereinstimmt. Dies setzt voraus, dass die Halteposition des Fahrzeugs 16 sehr genau bestimmt werden kann. Bereits kleine Abweichungen zwischen der virtuellen Realität und der realen Welt könnten zu Unfällen beim Einsteigen und Aussteigen beispielsweise, wie erwähnt, durch Stolpern, führen. Daher weist das erfindungsgemäße Fahrgeschäft 10 die Positionssensoren 48 auf, welche die Halteposition des Fahrzeugs 16 im dritten Abschnitt 30 sehr genau bestimmen können, wobei eine Genauigkeit von mindestens 10 mm anzustreben ist. Die Positionssensoren 48 unterscheiden sich daher von den Streckensensoren 40, welche die Position des Fahrzeugs 16 auf der Fahrstrecke 14 bestimmen. Die Streckensensoren 40 können beispielsweise als Lichtschranken ausgebildet sein, deren Position entlang der Strecke bekannt ist. Die Lichtschranke meldet nur, zu welcher Zeit das Fahrzeug 16 die Lichtschranke durchbrochen hat. Diese Information wird für einen Abgleich zwischen der Position des Fahrzeugs 16 auf der Strecke und der virtuellen Realität genutzt, um die Latenz so gering wie möglich zu halten. Es genügt, beispielsweise alle 10 m einen Streckensensor entlang der Strecke anzuordnen.

Je nach Ausgestaltung ist es mit den Streckensensoren 40 nicht möglich, die Halteposition des Fahrzeugs 16 im dritten Abschnitt 30 hinreichend genau zu bestimmen. Daher sind die Positionssensoren 48 auf eine deutlich höhere Präzision ausgelegt, um die Halteposition des Fahrzeugs 16 im dritten Abschnitt 30 genau genug bestimmen zu können. Hierzu können die Positionssensoren 48 induktiv arbeiten oder Laser verwenden.

Es ist auch möglich, das Fahrzeug 16 unter Verwendung der Signale der Positionssensoren 48 innerhalb des dritten Abschnitts 30 mit der entsprechenden Präzision in eine vorbestimmte Halteposition zu bewegen.

Es ist ebenso möglich, die erste Positionserfassungsvorrichtung 38, die zweite Positionserfassungsvorrichtung 42 und die dritte Positionserfassungsvorrichtung 46 gleich auszugestalten und zu einer Positionserfassungsvorrichtung zusammenzufassen. Beispielsweise bietet sich hierzu das "inside-out-tracking" an, bei dem die Positionssensoren 48 auf dem Head-Mounted-Display 36 angeordnet sind. Um das Datenvolumen in Grenzen zu halten, können die Positionssensoren 48 dann mit einer höheren Genauigkeit arbeiten, wenn sich der Benutzer im dritten Abschnitt 30 befindet, während die Genauigkeit und damit das Datenvolumen verringert werden kann, wenn sich der Benutzer im ersten Abschnitt 12 oder im zweiten Abschnitt 22 befindet.

Sobald der Fahrgast 20 in die Fahrgastaufnahme 18 eingestiegen ist, wird die Rückhalteeinrichtung in die Schließstellung gestellt und danach das Fahrzeug 16 entlang der Fahrstrecke 14 durch den ersten Abschnitt 12 bewegt. In der virtuellen Realität startet das Flugzeug und landet wieder beim Annähern und Einfahren des Fahrzeugs 16 in den dritten Abschnitt 30. Das Aussteigen des Fahrgasts 20 aus dem Fahrzeug 16 geschieht in entsprechender Weise wie zum Einstieg beschrieben. Anschließend verlässt der Fahrgast 20 den dritten Abschnitt 30 und geht durch den zweiten Abschnitt 22 zurück zum Eingangsbereich 52, wo er das Head-Mounted-Display 36 ablegt und das Fahrgeschäft 10 verlässt.

Im dargestellten Ausführungsbeispiel ist der dritte Abschnitt 30 nur von einer Seite der Fahrstrecke 14 zugänglich, so dass der Fahrgast 20 den dritten Abschnitt 30 über denselben Weg verlassen muss, über welchen er den dritten Abschnitt 30 betreten hat. Selbstverständlich kann ein weiterer zweiter Abschnitt 22 vorgesehen sein, welcher sich beispielsweise auf der gegenüberliegenden Seite der Fahrstrecke 14 dem dritten Abschnitt 30 anschließt. So ist es möglich, einen der beiden zweiten Abschnitte 22 nur zum Betreten des dritten Abschnitts 30 und den anderen der beiden Abschnitte 22 nur zum Verlassen des dritten Abschnitts 30 zu verwenden, was den Betrieb des Fahrgeschäfts 10 vereinfacht.

### Bezugszeichenliste

- 10: Fahrgeschäft
- 12: erster Abschnitt
- 14: Fahrstrecke
- 16: Fahrzeug
- 18: Fahrgastaufnahme

- 20: Fahrgast
- 22: zweiter Abschnitt
- 24: Wände
- 26: Treppe
- 28: Geländer

- 30: dritter Abschnitt
- 32: VR-Einrichtung
- 34: Recheneinrichtung
- 36: Head-Mounted-Display
- 38: erste Positionserfassungsvorrichtung

- 40: Streckensensor
- 42: zweite Positionserfassungsvorrichtung
- 44: Bewegungssensor
- 46: dritte Positionserfassungsvorrichtung
- 48: Positionssensor

- 50: Übermittlungseinrichtung
- 52: Eingangsbereich

## Patentansprüche

1. Fahrgeschäft, insbesondere Achterbahn, umfassend
- einen ersten Abschnitt (12), welcher eine Fahrstrecke (14) umfasst, auf der zumindest ein Fahrzeug (16) beweglich angeordnet ist, wobei das Fahrzeug (16) zur Aufnahme zumindest eines Fahrgasts (20) ausgebildet ist,
- einen zweiten Abschnitt (22), innerhalb welchem sich der Fahrgast (20) frei bewegen kann,
- einen dritten Abschnitt (30), der den ersten Abschnitt (12) mit dem zweiten Abschnitt (22) verbindet und in welchem der Fahrgast (20) in das Fahrzeug (16) einsteigen und aus dem Fahrzeug (16) aussteigen kann, und
- eine VR-Einrichtung (32) zum Erzeugen und Darstellen einer virtuellen Realität, mit welcher eine einer Fahrt des Fahrgasts (20) mit dem Fahrzeug (16) entlang der Fahrstrecke (14) im ersten Abschnitt (12), einer der Position und Bewegung des Fahrgasts (20) im zweiten Abschnitt (22) und einer dem Einsteigen und/oder dem Aussteigen des Fahrgasts (20) im dritten Abschnitt (30) entsprechende virtuelle Realität erzeugbar und auf einem dem Fahrgast (20) zugeordneten Head-Mounted-Display in Abhängigkeit der Position und der Bewegung des Fahrgasts (20) im Fahrgeschäft darstellbar ist, wobei die VR-Einrichtung (32)
- eine erste Positionserfassungsvorrichtung (38) zum Erfassen der Position des Fahrzeugs (16) auf der Fahrstrecke (14),
- eine zweite Positionserfassungsvorrichtung (42) zum Erfassen der Position und Bewegung des Fahrgasts (20) im zweiten und dritten Abschnitt (30), und
- eine dritte Positionserfassungsvorrichtung (46) zum Erfassen der Halteposition des Fahrzeugs (16) im dritten Abschnitt (30) aufweist.

2. Fahrgeschäft nach Anspruch 1,
**dadurch gekennzeichnet, dass** die dritte Positionserfassungsvorrichtung (46) derart eingerichtet ist, dass die Halteposition des Fahrzeugs (16) auf 20 mm bis 0,1 mm genau erfassbar ist.

3. Fahrgeschäft nach einem der Ansprüche 1 oder 2,
**dadurch gekennzeichnet, dass** die dritte Positionserfassungsvorrichtung (46) induktiv und/oder optisch arbeitende Positionssensoren (48) umfasst.

4. Fahrgeschäft nach Anspruch 3,
**dadurch gekennzeichnet, dass** die Positionssensoren (48) auf dem Fahrzeug (16) angeordnet sind und das Fahrzeug (16) eine Übermittlungseinrichtung (50) zum Übermitteln der Position des Fahrzeugs (16) an die VR-Einrichtung (32) aufweist.

5. Verfahren zum Betreiben eines Fahrgeschäfts, insbesondere einer Achterbahn, nach einem der vorherigen Ansprüche, umfassend folgende Schritte:
- Erfassen der Position des Fahrzeugs (16) auf der Fahrstrecke (14) mittels der ersten Positionserfassungsvorrichtung (38),
- Erfassen der Position und Bewegung des Fahrgasts (20) im zweiten und dritten Abschnitt (30) mittels der zweiten Positionserfassungsvorrichtung (42),
- Erfassen der Halteposition des Fahrzeugs (16) im dritten Abschnitt (30) mittels der dritten Positionserfassungsvorrichtung (46),
- Übermitteln der erfassten Positionen, Bewegung und Halteposition an die VR-Einrichtung (32), und
- Erzeugen und Darstellen einer virtuellen Realität, mit welcher eine einer Fahrt des Fahrgasts (20) mit dem Fahrzeug (16) entlang der Fahrstrecke (14) im ersten Abschnitt (12), einer der Position und Bewegung des Fahrgasts (20) im zweiten Abschnitt (22) und einer dem Einsteigen und/oder dem Aussteigen des Fahrgasts (20) im dritten Abschnitt (30) entsprechende virtuelle Realität erzeugt und auf einem dem Fahrgast (20) zugeordneten Head-Mounted-Display in Abhängigkeit der Position und Bewegung des Fahrgasts (20) im Fahrgeschäft dargestellt wird.

6. Verfahren nach Anspruch 5, umfassend folgenden Schritt:
- Erfassen der Halteposition des Fahrzeugs (16) auf 20 mm bis 0,1 mm genau mittels der dritten Positionserfassungsvorrichtung (46).

7. Verfahren nach Anspruch 6, umfassend folgenden Schritt:
- Definieren einer Halteposition des Fahrzeugs (16) im dritten Abschnitt (30) und
- Bewegen des Fahrzeugs (16) innerhalb des dritten Abschnitts derart, dass das Fahrzeug (16) auf 20 mm bis 0,1 mm genau die Halteposition einnimmt.

8. Verfahren nach einem der Ansprüche 5 bis 7, umfassend folgende Schritte:
- Darstellen der virtuellen Realität im ersten Abschnitt (12), im zweiten Abschnitt (22) und/oder im dritten Abschnitt (30) mittels einer in Echtzeit generierten Umgebungsdarstellung, mittels einer als Videosequenz vorberechneten Darstellung der virtuellen Realität oder mittels einer in Echtzeit generierten, aber verbunden mit vorberechneten Elementen dargestellten virtuellen Realität.

9. Computerprogramm zum Ausführen eines Verfahrens nach einem der Ansprüche 5 bis 8 und/oder zum Betreiben eines Fahrgeschäfts, insbesondere einer Achterbahn, nach einem der Ansprüche 1 bis 4, wobei das Computerprogramm Programmmittel zum Veranlassen der VR-Einrichtung (32) umfasst, die folgenden Schritte auszuführen, wenn das Computerprogramm auf der VR-Einrichtung (32) ausgeführt wird:
- Erfassen der Position des Fahrzeugs (16) auf der Fahrstrecke (14) mittels der ersten Positionserfassungsvorrichtung (38),
- Erfassen der Position und Bewegung des Fahrgasts (20) im zweiten und dritten Abschnitt (30) mittels der zweiten Positionserfassungsvorrichtung (42),
- Erfassen der Halteposition des Fahrzeugs (16) im dritten Abschnitt (30) mittels der dritten Positionserfassungsvorrichtung (46),
- Übermitteln der erfassten Positionen, Bewegung und Halteposition an die VR-Einrichtung (32), und
- Erzeugen und Darstellen einer virtuellen Realität, mit welcher eine einer Fahrt des Fahrgasts (20) mit dem Fahrzeug (16) entlang der Fahrstrecke (14) im ersten Abschnitt (12), einer der Position und Bewegung des Fahrgasts (20) im zweiten Abschnitt (22) und einer dem Einsteigen und/oder dem Aussteigen des Fahrgasts (20) im dritten Abschnitt (30) entsprechende virtuelle Realität erzeugt und auf einem dem Fahrgast (20) zugeordneten Head-Mounted-Display in Abhängigkeit der Position und Bewegung des Fahrgasts (20) im Fahrgeschäft dargestellt wird.

10. Computerprogramm nach Anspruch 9,
umfassend folgende Schritte:
- Automatisches Wechseln der Positionserfassung zwischen der ersten Positionserfassungsvorrichtung (38), der zweiten Positionserfassungsvorrichtung (42) und der dritten Positionserfassungsvorrichtung (46) in Abhängigkeit von der Position des Fahrgasts (20) und/oder von der Geschwindigkeit des Fahrzeugs (16), oder
- Wechseln der Positionserfassung zwischen der ersten Positionserfassungsvorrichtung (38), der zweiten Positionserfassungsvorrichtung (42) und der dritten Positionserfassungsvorrichtung (46) nach Bestätigung eines Mitarbeiters des Fahrgeschäfts (10).

## Claims

1. Amusement ride, in particular, a roller coaster, comprising
- a first segment (12) which comprises a circuit track (14) on which at least one vehicle (16) is moveably disposed, wherein the vehicle (16) is constructed to accommodate at least one passenger (20),
- a second segment (22) within which the passenger (20) can move freely about,
- a third segment (30) that connects the first segment (12) with the second segment (22) and in which the passenger (20) can enter the vehicle (16) and in which the passenger (20) can leave the vehicle (20), and
- a VR system (32) for generating and displaying a virtual reality that corresponds to a ride of the passenger (20) in the vehicle (16) along the circuit track (14) in the first segment (12), one that corresponds to the position and movement of the passenger (20) in the second segment (22) and one that corresponds to the passenger (20) entering or leaving the vehicle in the third segment (30) and which can be generated and displayed on a head-mounted display allocated to the passenger (20) in the amusement ride, wherein the VR system (32) comprises
- a first position detection device (38) for detecting the position of the vehicle (16) on the circuit track (14),
- a second position detection device (42) for detecting the position and movement of the passenger (20) in the second and third segments (30), and
- a third position detection device (46) for detecting the stop position of the vehicle (16) in the third segment (30).

2. Amusement ride in accordance with claim 1,
**characterized in that** the third position detection device (46) is configured to be able to detect the stop position of the vehicle (16) accurately at 20 mm up to 0.1 mm.

3. Amusement ride in accordance with either of claims 1 or 2,
**characterized in that** the third position detection device (46) comprises inductively and/or optically operating position sensors (48).

4. Amusement ride in accordance with claim 3,
**characterized in that** the position sensors (48) are arranged on the vehicle (16) and **in that** the vehicle (16) comprises a transmission system (50) for transmitting the position of the vehicle (16) to the VR system (32).

5. Method for operating an amusement ride, in particular a roller coaster, in accordance with any of the preceding claims, comprising the following steps:
- detecting the position of the vehicle (16) on the circuit tract (14) by means of the first position detection device (38),
- detecting the position and movement of the passenger (20) in the second and third segments (30) by means of the second position detection device (42),
- detecting the stop position of the vehicle (16) in the third segment (30) by means of the third position detection device (46),
- transmitting the detected positions, movement and stop position to the VR system (32), and
- generating and displaying a virtual reality that corresponds to a ride of the guest (20) in the vehicle (16) along the circuit track (14) in the first segment, to a position and movement of the passenger (20) in the second segment (22) and to an entering and/or leaving of the passenger (20) in the third segment (30) and which is generated and displayed on a head-mounted display allocated to the passenger (20) in dependency on the position and movement of the passenger (20) in the amusement ride.

6. Method in accordance with claim 5, comprising the following step:
- detecting the stop position of the vehicle (16) accurately at 20 mm up to 0.1 mm by means of the third position detection device (46).

7. Method in accordance with claim 6, comprising the following step:
- defining a stop position of the vehicle (16) in the third segment (30) and
- moving the vehicle (16) within the third segment such that the vehicle assumes the stop position accurately at 20 mm up to 0.1 mm.

8. Method in accordance with any of claims 5 to 7, comprising the following steps:
- displaying the virtual reality in the first segment (12), in the second segment (22) and/or in the third segment (30) by means of a depiction of the surrounding area, generated in real time, by means of a display of the virtual reality in the form of a previously calculated video sequence or by means of a virtual reality generated in real time but accompanied by previously calculated elements.

9. Computer program for executing a method in accordance with any of claims 5 to 8 and/or for operating an amusement ride, in particular a roller coaster, in accordance with any of claims 1 to 4, wherein the computer program comprises means that cause the VR system (32) to carry out the following steps when the computer program is executed by the VR system:
- detecting the position of the vehicle (16) on the circuit tract (14) by means of the first position detection device (38),
- detecting the position and movement of the passenger (20) in the second and third segments (30) by means of the second position detection device (42),
- detecting the stop position of the vehicle (16) in the third segment (30) by means of the third position detection device (46),
- transmitting the detected positions, movement and stop position to the VR system (32), and
- generating and displaying a virtual reality that corresponds to a ride of the guest (20) in the vehicle (16) along the circuit track (14) in the first segment, to a position and movement of the passenger (20) in the second segment (22) and to an entering and/or leaving of the passenger (20) in the third segment (30) and which is generated and displayed on a head-mounted display allocated to the passenger (20) in dependency on the position and movement of the passenger (20) in the amusement ride.

10. Computer program in accordance with claim 9,
comprising the following steps:
- automatically switching the position detection between the first position detection device (38), the second position detection device (42) and the third position detection device (46) in dependency on the position of the passenger (20) and/or the speed of the vehicle (16), or
- switching the position detection between the first position detection device (38), the second position detection device (42) and the third position detection device (46) after confirmation by an operator of the amusement ride (10).

## Revendications

1. Attraction foraine notamment grand huit comprenant :
- un premier secteur (12) avec un trajet de circulation (14) sur lequel se déplace au moins un véhicule (16), ce véhicule (16) étant conçu pour recevoir au moins un passager (20),
- un second secteur (22) dans lequel le passager (20) peut se déplacer librement,
- un troisième secteur (30) reliant le premier secteur (12) au second secteur (22) et dans lequel le passager (20) peut monter dans le véhicule (16) ou en descendre, et
- une installation de réalité virtuelle (32) pour générer et représenter une réalité virtuelle consistant à générer une réalité virtuelle correspondant à la circulation du passager (20) avec le véhicule (16) le long du trajet (14) dans le premier secteur (12), à une position du mouvement du passager (20) dans le second secteur (22) et à la montée et/ou descente du passager (20) dans le troisième secteur (30), pour être représentée en fonction de la position et du mouvement du passager (20) dans l'attraction foraine, avec une lunette de visualisation attribuée au passager (20),
l'installation de réalité virtuelle (32) comprenant :
* un premier dispositif de saisie de position (38) pour saisir la position du véhicule (16) sur le trajet (14),
* un second dispositif de saisie de position (42) pour saisir la position et le mouvement du passager (20) dans le second et le troisième secteur (30), et
* un troisième dispositif de saisie de position (46) pour saisir la position d'arrêt du véhicule (16) dans le troisième secteur (30).

2. Attraction foraine selon la revendication 1,
**caractérisée en ce que**
le troisième dispositif de saisie de position (46) est conçu pour saisir la position d'arrêt du véhicule (16) avec une précision de 20 mm-0,1 mm.

3. Attraction foraine selon l'une des revendications 1 ou 2,
**caractérisée en ce que**
le troisième dispositif de saisie de position (46) comporte des capteurs de position (48) à fonctionnement inductif et/ou optique.

4. Attraction foraine selon la revendication 3,
**caractérisée en ce que**
les capteurs de position (48) sont installés sur le véhicule (16) qui comporte une installation de transmission (50) pour transmettre la position du véhicule (16) à l'installation de réalité virtuelle (32).

5. Procédé de gestion d'une attraction foraine notamment d'un grand huit selon l'une des revendications précédentes comprenant les étapes suivantes consistant à :
- saisir la position du véhicule (16) sur le trajet (14) à l'aide d'un premier dispositif de saisie de position (38),
- saisir la position et le mouvement du passager (20) sur un second et un troisième secteur (30) à l'aide du second dispositif de saisie de position (42),
- saisir la position d'arrêt du véhicule (16) dans le troisième secteur (30) à l'aide du troisième dispositif de saisie de position (46),
- transmettre les positions saisies, le mouvement et la position d'arrêt, à l'installation de réalité virtuelle (32), et
- générer et représenter une réalité virtuelle consistant à générer une réalité virtuelle correspondant au parcours du passager (20) avec le véhicule (16) le long du trajet (14) dans le premier secteur (12), à une position et mouvement du passager (20) dans le secteur (22) et à la montée et/ou descente du passager (20) dans le troisième secteur (30), et la représenter en fonction de la position et du mouvement du passager (20) dans l'attraction foraine sur des lunettes de visualisation attribuée au passager (20).

6. Procédé selon la revendication 5,
comprenant l'étape suivante consistant à :
saisir la position d'arrêt du véhicule (16) avec une précision de 20 mm à 0,1 mm à l'aide du troisième dispositif de saisie de position (46).

7. Procédé selon la revendication 6,
comprenant les étapes suivantes consistant à :
- définir une position d'arrêt du véhicule (16) dans le troisième secteur (30), et
- déplacer le véhicule (16) dans le troisième secteur de façon que le véhicule prenne précisément sa position d'arrêt avec une précision de 20 mm à 0,1 mm.

8. Procédé selon l'une des revendications 5 à 7,
comprenant les étapes suivantes consistant à :
représenter la réalité virtuelle dans le premier secteur (12), dans le second secteur (22) et/ou dans le troisième secteur (30) à l'aide d'une représentation de l'environnement, générée en temps réel à l'aide d'une représentation calculée au préalable comme séquence vidéo de la réalité virtuelle ou à l'aide d'une réalité virtuelle générée en temps réel mais reliée à des éléments précalculés.

9. Programme d'ordinateur pour l'exécution d'un procédé selon l'une des revendications 5 à 8, et/ou pour la gestion d'une attraction foraine notamment d'un grand huit selon l'une des revendications 1 à 4, le programme d'ordinateur comportant des éléments de programme pour l'installation de réalité virtuelle (32), pour effectuer, lorsque le programme d'ordinateur est appliqué par l'installation de réalité virtuelle (32), les étapes suivantes consistant à :
- saisir la position du véhicule (16) sur le trajet (14) à l'aide du premier dispositif de saisie de position (38),
- saisir la position et le mouvement du passager (20) dans le second et le troisième secteur à l'aide du second dispositif de saisie de position (42),
- saisir la position d'arrêt du véhicule (16) dans le troisième secteur (30) à l'aide du troisième dispositif de saisie de position (46),
- transmettre les positions saisies, le mouvement et la position d'arrêt à l'installation de réalité virtuelle (32), et
- générer et représenter une réalité virtuelle avec laquelle on génère une réalité virtuelle correspondant à la circulation du passager (20) avec le véhicule (16) le long du trajet (14) dans le premier secteur (12), à la position et au mouvement du passager (20) dans le second secteur (22) et à la montée et/ou descente du passager (20) dans le troisième secteur (30), et présenter cette réalité virtuelle en fonction de la position et du mouvement du passager (20) dans l'attraction foraine sur les lunettes de visualisation attribuées au passager (20).

10. Programme d'ordinateur selon la revendication 9,
comprenant les étapes suivantes consistant à :
- modifier automatiquement la saisie de position entre le premier dispositif de saisie de position (38), le second dispositif de saisie de position (42) et le troisième dispositif de saisie de position (46) en fonction de la position du passager (20) et/ou de la vitesse du véhicule (16), ou
- alterner la saisie de position entre le premier dispositif de saisie de position (38), le second dispositif de saisie de position (42) et le troisième dispositif de saisie de position (46) par l'intervention d'un opérateur de l'attraction foraine (10).
